# EUROPEAN PATENT APPLICATION

(11) **EP 4 617 979 A1**
(43) Date of publication of application: **17.09.2025**
(21) Application number: 25162023.3
(22) Date of filing: 06.03.2025
(51) Int. Cl.: G06Q 20/18, G06Q 20/20, G07G 1/00, G07G 3/00

(54) **FRAUD DETECTION DEVICE, FRAUD DETECTION SYSTEM, FRAUD DETECTION METHOD, AND COMPUTER PROGRAM PRODUCT FOR FRAUD DETECTION**

(30) Priority: 15.03.2024 JP 2024041641
(71) Applicant: Glory Ltd., Hyogo 670-8567 (JP)
(72) Inventor: KURIHARA, Yuka, Hyogo 670-8567 (JP); KOBAYASHI, Keishi, Hyogo 670-8567 (JP)
(74) Representative: SSM Sandmair

(57) **Abstract**

A camera 10 captures an image of a customer picking a commodity, and transmits the image to a management device 40 (S1). The management device 40 specifies the picked commodity from the received image (S2), and stores the same into purchase-planned commodity data in association with a basket ID assigned to each basket. When the customer has performed checkout with a self-checkout machine 50, the self-checkout machine 50 transmits data of a settled commodity to the management device 40 (S3). The management device 40 stores the received data of the commodity into checkout commodity data in association with the basket ID, and judges matching between the purchase-planned commodity and the checkout commodity (S4). When the result of the judgement is "mismatch", a clerk is notified of this mismatch through a clerk terminal 30 (S5).

## Description

### TECHNICAL FIELD

The present disclosure relates to a fraud detection device, a fraud detection system, a fraud detection method, and a computer program product for fraud detection for detecting a fraudulent act during checkout for commodities with a self-checkout machine.

### BACKGROUND ART

In recent years, there has been an increase in the number of stores introducing a self-checkout machine that allows a customer to perform checkout for commodities that the customer purchases. In the checkout, the customer uses the self-checkout machines to scan labels attached to the commodities and prices of the commodities are identified based on information on the labels. Such a self-checkout machine may be called a self-checkout device, a self-checkout register, or a self-checkout terminal.

With such a self-checkout machine, there is a possibility that a customer performs a fraudulent act. Specifically, a customer may intentionally or inadvertently skip scanning of a commodity to purchase, or a customer may scan a commodity that is cheaper than a commodity that the customer is actually going to purchase. These acts may be called "shoplifting".

A conventional technology for preventing a fraudulent act, such as shoplifting, has been known. For example, Japanese Laid-Open Patent Publication No. 2021-135620 discloses a fraud prevention system. In the fraud prevention system, an image of a commodity to be put in a shopping basket is captured by a camera and the commodity is specified using a machine-learned model, followed by checkout. Specifically, the behavior of each customer is monitored by using cameras in the store. The information on the commodity put in the shopping basket is obtained by using a smart cart or a smartphone of the customer. The information on the behavior and the commodity is used to check whether the scanning result of the commodity is correct or not in order to detect a fraudulent act of the customer.

### SUMMARY

In the conventional fraud prevention system, it is necessary to capture the behavior of each customer in the store by using the in-store camera, and manage the information on a commodity put in the shopping basket, by using the smart cart or the smartphone. It requires complicated management and handling of data on customers and commodities. In order to realize the conventional fraud prevention system, new machines need to be installed in the store, and the installation cost is a burden on the store.

The present disclosure has been made in view of the problem, as well as other problems, of the conventional art, and the present disclosure addresses these issues, as discussed herein, with a fraud detection device, a fraud detection system, a fraud detection method, and a computer program product for detecting a fraudulent act during checkout of commodities with a self-checkout machine.

A fraud detection device according to one aspect of the present disclosure is used in a self-checkout system in which a customer registers a commodity by performing a scanning operation by himself/herself. The fraud detection device includes: an image acquisition unit configured to acquire a commodity-picking image that is captured such that identification information, which is recognizable from an image and is assigned to a container prepared in a store and used to contain a commodity, and the commodity picked and contained in the container are recognizable; a memory configured to store therein a commodity specified by the commodity-picking image and the identification information of the container in association with each other; a registered commodity specification unit configured to specify a commodity registered in the self-checkout system; a commodity confirmation unit configured to confirm whether or not the commodity specified by the registered commodity specification unit matches the commodity stored in the memory in association with the identification information of the container in which the commodity specified by the registered commodity specification unit has been contained; and a notification unit configured to issue an alert when it is confirmed by the commodity confirmation unit that there is a mismatch.

The objects, features, advantages, and technical and industrial significance of this disclosure will be better understood by the following description and the accompanying drawings of the disclosure.

### BRIEF DESCRIPTION OF THE DRAWINGS

FIGS. 1A and 1B illustrate an outline of a fraud detection system according to Embodiment 1;
FIG. 2 shows a system configuration example of the fraud detection system according to Embodiment 1;
FIG. 3 is a functional block diagram showing a configuration example of a management device shown in FIG. 2;
FIGS. 4A and 4B show examples of commodity management data and commodity shelf data shown in FIG. 3;
FIGS. 5A and 5B show examples of purchase-planned commodity data and checkout commodity data shown in FIG. 3;
FIG. 6 shows an example of report history data shown in FIG. 3;
FIGS. 7A and 7B show examples of display on a clerk terminal according to Embodiment 1;
FIG. 8 is a flowchart (part 1) showing a procedure regarding a fraud detection process according to Embodiment 1;
FIG. 9 is a flowchart (part 2) showing the procedure regarding the fraud detection process according to Embodiment 1;
FIG. 10 is a flowchart (part 3) showing the procedure regarding the fraud detection process according to Embodiment 1;
FIG. 11 shows an example of a hardware configuration according to Embodiment 1;
FIGS. 12A to 12C shows examples of display on a clerk terminal according to a modification;
FIG. 13 illustrates an outline (part 1) of a fraud detection system according to Embodiment 2;
FIGS. 14A and 14B illustrate the outline (part 2) of the fraud detection system according to Embodiment 2;
FIG. 15 is a functional block diagram showing a configuration example of a management device according to Embodiment 2;
FIG. 16 shows an example of purchase-planned commodity data shown in FIG. 15;
FIG. 17 shows an example of picked commodity data shown in FIG. 15;
FIGS. 18A and 18B show an example of correction of purchase-planned commodity data according to Embodiment 2; and
FIG. 19 is a flowchart showing a procedure regarding a correction process for purchase-planned commodity data according to Embodiment 2.

### DESCRIPTION OF EMBODIMENTS

### [Embodiment 1]

Hereinafter, an embodiment of a fraud detection device, a fraud detection system, a fraud detection method, and a computer program product for fraud detection will be described in detail with reference to the drawings.

### <Outline of fraud detection system according to

### Embodiment 1>

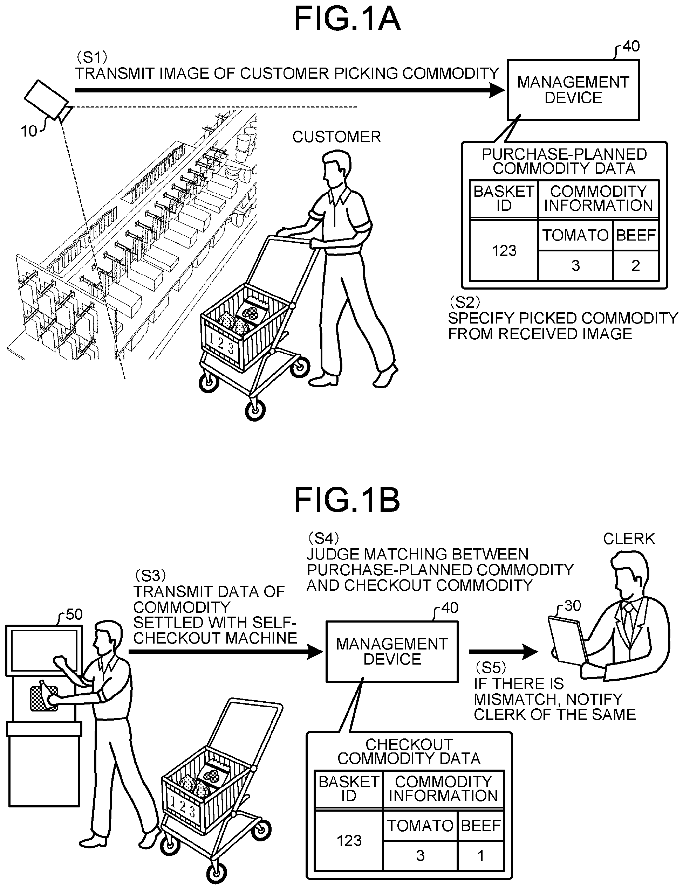

First, an outline of a fraud detection system according to Embodiment 1 will be described with reference to FIGS. 1A and 1B.

As shown in FIG. 1A, in the fraud detection system, a camera 10 captures an image of a customer picking a commodity, and transmits the image to a management device 40 (S1). The management device 40 specifies the picked commodity from the received image (S2). The management device 40 stores data on the picked commodity into purchase-planned commodity data in association with a basket ID assigned to a basket storing the picked commodity.

As shown in FIG. 1B, when the customer has performed checkout with a self-checkout machine 50, the self-checkout machine 50 transmits data on a settled commodity to the management device 40 (S3). The management device 40 stores the received data on the commodity into checkout commodity data in association with the basket ID. The management device 40 judges matching of data between the purchase-planned commodity and the checkout commodity (S4).

Specifically, commodity information in the purchase-planned commodity data and commodity information in the checkout commodity data, in association with the same basket ID, are compared to judge whether or not there is a match. For example, when the commodity information in the purchase-planned commodity data with the basket ID "123" is "three tomatoes, two packs of beef" and the commodity information in the checkout commodity data with the same basket ID is "three tomatoes, one pack of beef", it is judged that there is a mismatch.

When the result of the judgement is "mismatch", a store clerk is notified of this mismatch through a clerk terminal 30 (S5).

As described above, in the fraud detection system according to Embodiment 1, the purchase-planned commodity is specified from the image of the customer picking the commodity, matching with the checkout commodity settled with the self-checkout machine is judged, and if there is a mismatch, the store clerk is notified of this mismatch. Therefore, a fraudulent act during checkout for commodities with the self-checkout machine can be efficiently detected, and the fraudulent act can be handled by the store clerk.

### <System configuration of fraud detection system according to Embodiment 1>

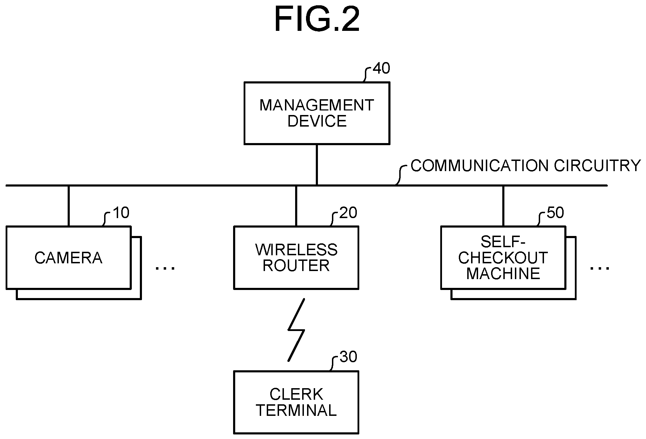

The system configuration of the fraud detection system according to Embodiment 1 will be described with reference to FIG. 2.

As shown in FIG. 2, the management device 40 installed in an office or the like of the store is communicably connected to cameras 10, a wireless router 20, and self-checkout machines 50 via communication circuitry. The wireless router 20 is connected to the clerk terminal 30 by short-range wireless communication such as Wi-Fi (registered trademark).

Each camera 10 is an imaging device installed in a certain place in the store so as to capture an image of the shopping state of a customer in the store and/or the checkout state of the customer with the self-checkout machine 50. The camera 10 transmits the captured image to the management device 40.

The clerk terminal 30 is a terminal device, such as a tablet, possessed by the clerk. The clerk terminal 30 displays a suspicious customer warning screen upon receiving a suspicious customer warning from the management device 40. The clerk terminal 30 displays a fraudulent checkout warning screen upon receiving a fraudulent checkout warning from the management device 40.

The self-checkout machine 50 is a device with which the customer performs checkout for commodities by himself/herself. Upon receiving a checkout commodity data request from the management device 40, the self-checkout machine 50 transmits the checkout commodity data to the management device 40.

The management device 40 is a device for detecting fraud related to checkout for commodities. Upon receiving data related to a commodity, the management device 40 stores the received data into commodity management data. Upon receiving commodity display information for each commodity shelf, the management device 40 stores the received commodity display information for each commodity shelf into commodity shelf data.

When a face image of a customer shown in the image data acquired from the camera 10 is judged to be the same person as a face image stored in report history data, the number of reports in the past is three or more, and a report is not yet made in that day, the management device 40 notifies the clerk terminal 30 of a suspicious customer warning including this face image.

The management device 40 reads out a number from a number tag attached to a shopping basket or a shopping cart shown in the image data acquired from the camera 10 to acquire this number as a basket ID. The management device 40 acquires a face image of a customer who carries the shopping basket or pushes the shopping cart, corresponding to the basket ID. The management device 40 stores the basket ID and the face image in association with each other into the purchase-planned commodity data.

When the management device 40 detects, in the image data acquired from the camera 10, a motion of taking out a commodity from a commodity shelf and putting the commodity into a shopping basket or a shopping cart, the management device 40 specifies the taken out commodity based on the position on the commodity shelf from which the commodity is taken out, the commodity management data, and the commodity shelf data. The management device 40 acquires the basket ID of the shopping basket or the shopping cart in which the commodity is put, and stores the name of the specified commodity into the purchase-planned commodity data in association with the basket ID.

The management device 40 specifies a checkout machine ID of a self-checkout machine 50 with which the customer has performed checkout, by using image data that is acquired from the camera 10 and shows the checkout state at the self-checkout machine 50. The management device 40 transmits a checkout commodity data request to the self-checkout machine 50 corresponding to the specified checkout machine ID. Upon receiving the checkout commodity data from the self-checkout machine 50, the management device 40 stores the checkout commodity data in association with the basket ID and the checkout machine ID.

When the checkout commodity data has been updated, the management device 40 specifies the basket ID corresponding to the updated data, and judges matching between the purchase-planned commodity data corresponding to the basket ID and the updated checkout commodity data. Upon judging that there is a mismatch, the management device 40 notifies the clerk terminal 30 of a fraudulent checkout warning. Also, the management device 40 updates the report history data by adding 1 to the number of reports. On the other hand, upon judging that there is a match, the management device 40 deletes data related to the matching judgement from the purchase-planned commodity data and the checkout commodity data, thereby updating the data.

### <Configuration of management device 40>

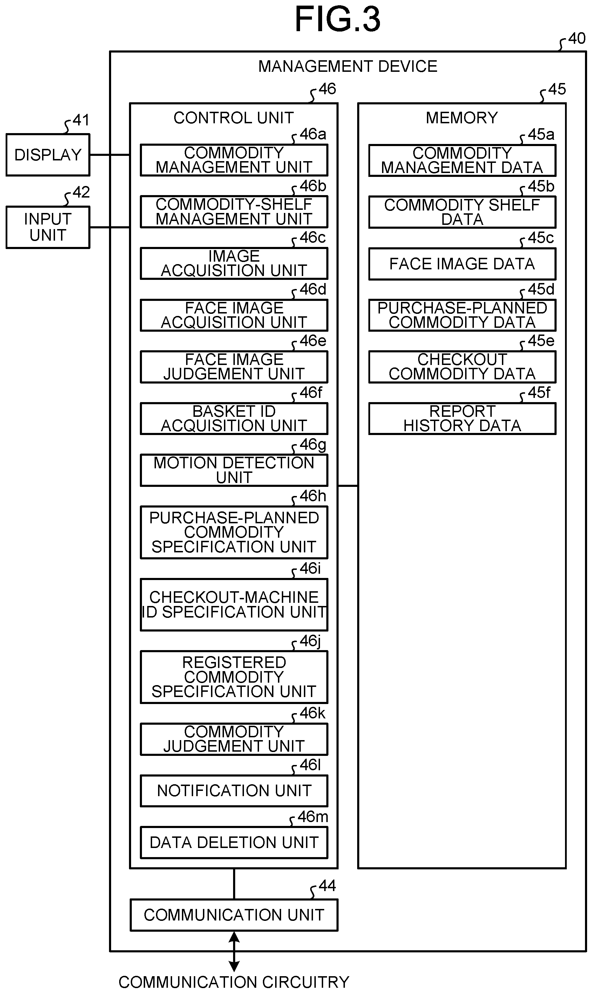

The configuration of the management device 40 shown in FIG. 2 will be described with reference to a functional block diagram shown in FIG. 3. As shown in FIG. 3, the management device 40 is connected to a display 41 and an input unit 42. The management device 40 includes a communication unit 44, a memory 45, and a control unit 46.

The display 41 is a display device such as a liquid crystal panel display. The input unit 42 is an input device such as a keyboard and a mouse. The communication unit 44 is an interface for performing data communication with the camera 10, the clerk terminal 30, and the self-checkout machine 50 via the communication circuitry.

The memory 45 is a storage device such as a hard disk drive or a non-volatile memory. The memory 45 stores therein commodity management data 45a, commodity shelf data 45b, face image data 45c, purchase-planned commodity data 45d, checkout commodity data 45e, and report history data 45f.

The commodity management data 45a includes information related to commodities. The commodity shelf data 45b includes commodity numbers of commodities displayed on commodity shelves. The commodity shelf data 45b indicates planogram information. The face image data 45c includes face images of customers.

The purchase-planned commodity data 45d includes commodity information of commodities that are picked and put in baskets by customers. The checkout commodity data 45e includes commodity information of commodities settled with the self-checkout machines 50. The report history data 45f includes face information of a customer who seems to have performed a fraud. The face information of the customer is stored in the report history data 45f when it is judged that the customer has performed the fraud on checkout for commodities. The number of reports on the judgement is stored for each customer in the report history data 45f.

The control unit 46 is a controller for controlling the entirety of the management device 40. The control unit 46 includes a commodity management unit 46a, a commodity-shelf management unit 46b, an image acquisition unit 46c, a face image acquisition unit 46d, a face image judgement unit 46e, a basket ID acquisition unit 46f, a motion detection unit 46g, a purchase-planned commodity specification unit 46h, a checkout-machine ID specification unit 46i, a registered commodity specification unit 46j, a commodity judgement unit 46k, a notification unit 46l, and a data deletion unit 46m. In actuality, processes corresponding to the commodity management unit 46a, the commodity-shelf management unit 46b, the image acquisition unit 46c, the face image acquisition unit 46d, the face image judgement unit 46e, the basket ID acquisition unit 46f, the motion detection unit 46g, the purchase-planned commodity specification unit 46h, the checkout-machine ID specification unit 46i, the registered commodity specification unit 46j, the commodity judgement unit 46k, the notification unit 46l, and the data deletion unit 46m are performed by loading programs for these units into a CPU (Central Processing Unit) and causing the CPU to execute the programs.

The commodity management unit 46a is a processing unit for managing the commodity management data 45a. Upon receiving data related to a commodity from the input unit 42, the commodity management unit 46a stores the received data into the commodity management data 45a.

The commodity-shelf management unit 46b is a processing unit for managing the commodity shelf data 45b. Upon receiving commodity display information for each commodity shelf from the input unit 42, the commodity-shelf management unit 46b stores the received commodity display information for each commodity shelf into the commodity shelf data 45b. The commodity display information for each commodity shelf includes commodity numbers for each of up-down and left-right shelf sections into which the commodity shelf is divided. For example, the commodity shelf is divided in the up-down direction into an upper section, an intermediate section, and a lower section, and is divided in the left-right direction into a left shelf, an intermediate shelf, and a right shelf.

The image acquisition unit 46c is a processing unit for acquiring images captured by the cameras 10. The image acquisition unit 46c acquires image data transmitted from all the cameras 10 installed in the store via communication circuitry.

The face image acquisition unit 46d is a processing unit for acquiring the face image of each customer. The face image acquisition unit 46d recognizes a face image of a customer shown in the image data acquired by the image acquisition unit 46c. The face image acquisition unit 46d acquires the recognized face image, and stores into the face image data 45c.

The face image judgement unit 46e is a processing unit for judging whether or not the face image acquired by the face image acquisition unit 46d is the same person as the face image stored in the report history data 45f. Upon judging that the face image acquired by the face image acquisition unit 46d is the same person as the face image stored in the report history data 45f, the face image judgement unit 46e transmits, to the notification unit 46l, suspicious customer information including the face image in the report history data 45f.

The basket ID acquisition unit 46f is a processing unit for acquiring basket IDs assigned to shopping baskets and shopping carts. The basket ID acquisition unit 46f reads out a number from a number tag attached to a shopping basket or a shopping cart shown in the image data acquired by the image acquisition unit 46c to acquire this number as a basket ID.

When the basket ID has been acquired, the basket ID acquisition unit 46f acquires, from the face image acquisition unit 46d, the face image of the customer who carries the shopping basket or pushes the shopping cart, corresponding to the basket ID. The basket ID acquisition unit 46f stores the basket ID and the face image in association with each other into the purchase-planned commodity data 45d.

The motion detection unit 46g is a processing unit for detecting picking motions of each customer. The motion detection unit 46g detects the commodity picking motion from the motions of the customer shown in the image data acquired by the image acquisition unit 46c. Specifically, a motion of taking out a commodity from a commodity shelf and a motion of returning the commodity to the shelf, and a motion of putting a commodity into a shopping basket or a shopping cart and a motion of taking out the commodity from the basket or the cart, are detected as the picking motions.

The purchase-planned commodity specification unit 46h is a processing unit for specifying a commodity put in a shopping basket or a shopping cart. If a motion of taking out a commodity from a commodity shelf and putting the commodity into a shopping basket or a shopping cart is detected from the picking motions detected by the motion detection unit 46g, the purchase-planned commodity specification unit 46h specifies the corresponding commodity based on the position on the commodity shelf from which the commodity is taken out, the commodity management data 45a, and the commodity shelf data 45b. The basket ID of the shopping basket or the shopping cart in which the commodity has been put is acquired by the basket ID acquisition unit 46f. The name of the specified commodity is stored in the purchase-planned commodity data 45d in association with the basket ID.

The checkout-machine ID specification unit 46i is a processing unit for specifying the checkout machine ID of a self-checkout machine 50 with which a customer performs checkout. The checkout-machine ID specification unit 46i specifies the checkout machine ID of the self-checkout machine 50 with which the customer performs checkout, by using image data showing the checkout state at the self-checkout machine 50 among pieces of image data acquired by the image acquisition unit 46c.

The registered commodity specification unit 46j is a processing unit for acquiring checkout commodity data. The registered commodity specification unit 46j transmits a checkout commodity data request to the self-checkout machine 50 corresponding to the checkout machine ID specified by the checkout-machine ID specification unit 46i. The basket ID of the shopping basket or the shopping cart, from which a commodity is taken out and settled with the self-checkout machine 50, is acquired by the basket ID acquisition unit 46f. Upon receiving the checkout commodity data from the self-checkout machine 50, the registered commodity specification unit 46j stores the received checkout commodity data into the checkout commodity data 45e in association with the basket ID and the checkout machine ID acquired from the basket ID acquisition unit 46f.

The commodity judgement unit 46k is a processing unit for judging presence/absence of fraud related to checkout for commodities. When the checkout commodity data 45e is updated by the registered commodity specification unit 46j, the commodity judgement unit 46k specifies the basket ID of the updated data, and extracts purchase-planned commodity data corresponding to the basket ID from the purchase-planned commodity data 45d. The commodity judgement unit 46k compares the commodity information in the updated checkout commodity data 45e with the commodity information in the data extracted from the purchase-planned commodity data 45d, to judge matching between them. Upon judging that there is a mismatch, the commodity judgement unit 46k transmits, to the notification unit 46l, fraudulent checkout information including the checkout machine ID, the basket ID, the monetary amount in the checkout commodity data 45e, and the monetary amount in the purchase-planned commodity data 45d, as well as the face image in the extracted purchase-planned commodity data 45d. On the other hand, upon judging that there is a match, the commodity judgement unit 46k transmits checkout completion information to the data deletion unit 46m.

The notification unit 46l is a processing unit for notifying the clerk terminal 30 of a suspicious customer warning and a fraudulent checkout warning. Upon receiving the suspicious customer information from the face image judgement unit 46e, the notification unit 46l specifies, from the report history data 45f, the number of reports and the report state corresponding to the face image included in the suspicious customer information. If the specified number of reports is three or more and the specified report state is "unreported", the notification unit 461 notifies the clerk terminal 30 of the suspicious customer warning including the face image, and updates the report state in the report history data 45f to "reported".

Upon receiving the fraudulent checkout information from the commodity judgement unit 46k, the notification unit 46l notifies the clerk terminal 30 of the fraudulent checkout information as the fraudulent checkout warning, and updates the report history data 45f by adding 1 to the number of reports corresponding to the face image received from the commodity judgement unit 46k.

The data deletion unit 46m is a processing unit for, if there is a match between purchase-planned commodities and checkout commodities, deleting data corresponding to these commodities. Upon receiving the checkout completion information from the commodity judgement unit 46k, the data deletion unit 46m deletes the data related to the judgement of the commodity judgement unit 46k from the purchase-planned commodity data 45d and the checkout commodity data 45e, thereby updating the data 45d and 45e.

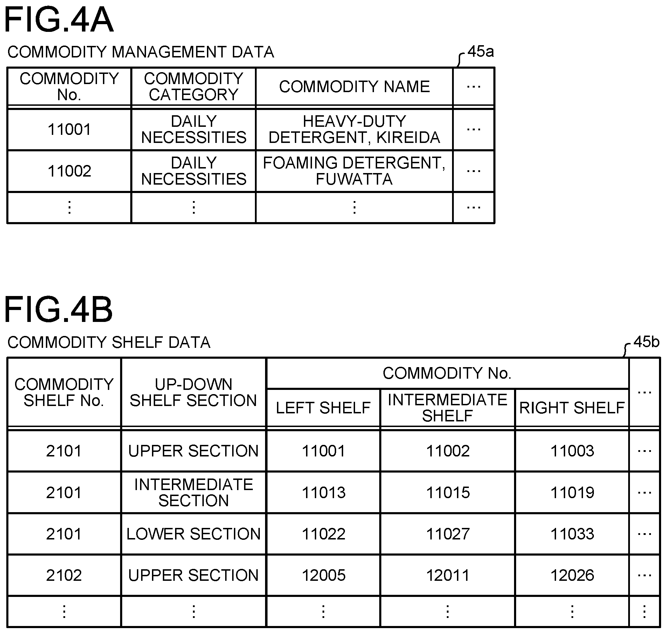

Next, an example of the data stored in the memory 45 of the management device 40 shown in FIG. 3 will be described. FIGS. 4A, 4B, FIGS. 5A, 5B, and FIG. 6 respectively show examples of the commodity management data 45a, the commodity shelf data 45b, the purchase-planned commodity data 45d, the checkout commodity data 45e, and the report history data 45f, shown in FIG. 3.

In the commodity management data 45a shown in FIG. 4A, commodity number "11001" is associated with commodity category "daily necessities" and commodity name "heavy-duty detergent, Kireida", and commodity number "11002" is associated with commodity category "daily necessities" and commodity name "foaming detergent, Fuwatta".

In the commodity shelf data 45b shown in FIG. 4B, commodity shelf number "2101" and up-down shelf section "upper section" are associated with commodity number "11001" of the left shelf, commodity number "11002" of the intermediate shelf, and commodity number "11003" of the right shelf, and commodity shelf number "2101" and up-down shelf section "intermediate section" are associated with commodity number "11013" of the left shelf, commodity number "11015" of the intermediate-shelf, and commodity number "11019" of the right shelf.

Furthermore, in the commodity shelf data 45b, commodity shelf number "2101" and up-down shelf section "lower section" are associated with commodity number "11022" of the left shelf, commodity number "11027" of the intermediate shelf, and commodity number "11033" of the right shelf, and commodity shelf number "2102" and up-down shelf section "upper section" are associated with commodity number "12005" of the left shelf, commodity number "12011" of the intermediate shelf, and commodity number "12026" of the right shelf.

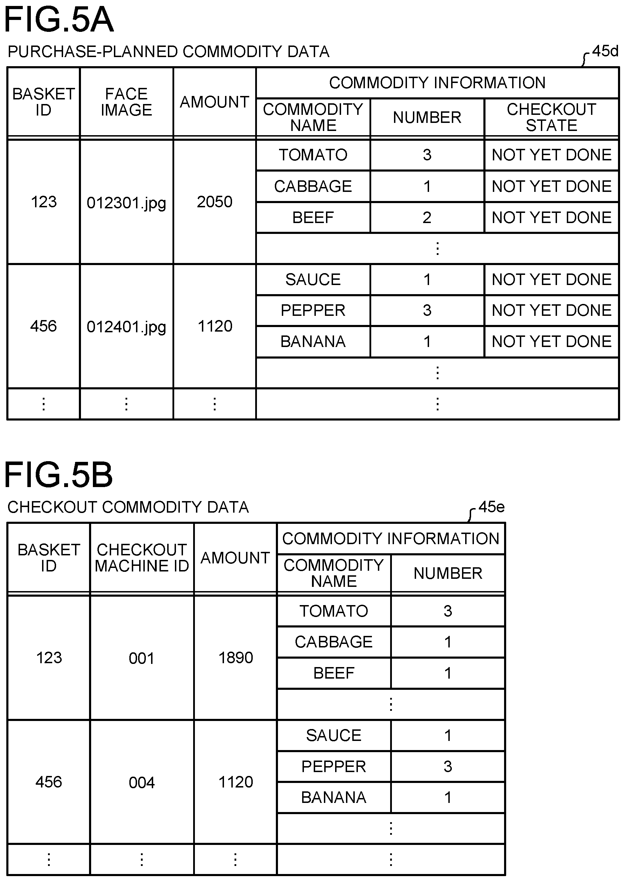

In the purchase-planned commodity data 45d shown in FIG. 5A, basket ID "123" is associated with face image "012301.jpg" and monetary amount "2,050" JPY. Furthermore, the basket ID "123" is associated with, as commodity information, a state where the commodity name is "tomato", the number is "3", and the checkout state is "not yet done", a state where the commodity name is "cabbage", the number is "1", and the checkout state is "not yet done", and a state where the commodity name is "beef", the number is "2", and the checkout state is "not yet done".

Furthermore, in the purchase-planned commodity data 45d, basket ID "456" is associated with face image "012401.jpg" and monetary amount "1,120" JPY. Moreover, the basket ID "456" is associated with, as commodity information, a state where the commodity name is "sauce", the number is "1", and the checkout state is "not yet done", a state where the commodity name is "pepper", the number is "3", and the checkout state is "not yet done", and a state where the commodity name is "banana", the number is "1" , and the checkout state is "not yet done".

In the checkout commodity data 45e shown in FIG. 5B, the basket ID "123" is associated with checkout machine ID "001" and monetary amount "1,890" JPY. Furthermore, the basket ID "123" is associated with, as commodity information, a state where the commodity name is "tomato" and the number is "3", a state where the commodity name is "cabbage" and the number is "1", and a state where the commodity name is "beef" and the number is "1".

Moreover, in the checkout commodity data 45e, the basket ID "456" is associated with checkout machine ID "004" and monetary amount "1,120" JPY. Furthermore, the basket ID "456" is associated with, as commodity information, a state where the commodity name is "sauce" and the number is "1", a state where the commodity name is "pepper" and the number is "3", and a state where the commodity name is "banana" and the number is "1".

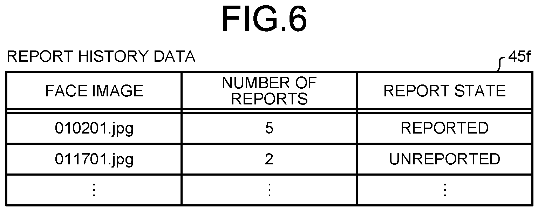

In the report history data 45f shown in FIG. 6, face image "010201.jpg" is associated with the number of reports being "5" and the report state being "reported", and face image "011701.jpg" is associated with the number of reports being "2" and the report state being "unreported".

### <Example of display on clerk terminal 30 according to

### Embodiment 1>

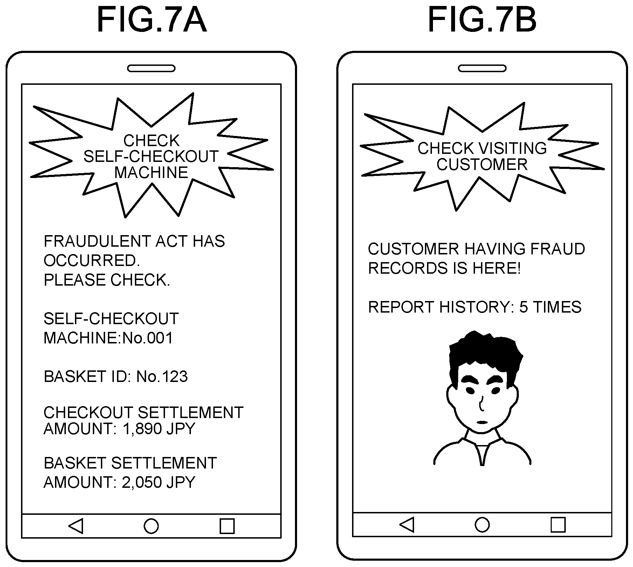

Examples of display on the clerk terminal 30 according to Embodiment 1 will be described with reference to FIGS. 7A and 7B. The clerk terminal 30 displays a fraudulent checkout warning screen upon receiving a fraudulent checkout warning from the management device 40. The clerk terminal 30 displays a suspicious customer warning screen upon receiving a suspicious customer warning.

As shown in FIG. 7A, the fraudulent checkout warning screen displays the fact that a fraudulent act has occurred, the corresponding checkout machine ID and basket ID, the monetary amount of checkout commodities, and the monetary amount of purchase-intended commodities.

For example, "Fraudulent act has occurred. Please check.", "self-checkout machine: No. 001", "basket ID: No. 123", and "checkout settlement amount: 1,890 JPY, basket settlement amount: 2,050 JPY" are displayed. Note that the checkout settlement amount is the monetary amount of commodities settled with the self-checkout machine 50, while the basket settlement amount is the monetary amount to be calculated when the purchase-planned commodities put in the shopping basket are settled.

As shown in FIG. 7B, the suspicious customer warning screen displays the fact that a customer having fraud records is visiting the store, and the number of reports related to fraudulent acts, together with the face image of this customer. For example, "Customer having fraud records is here!" and "report history: 5 times" are displayed.

### <Procedure regarding fraud detection process according to Embodiment 1>

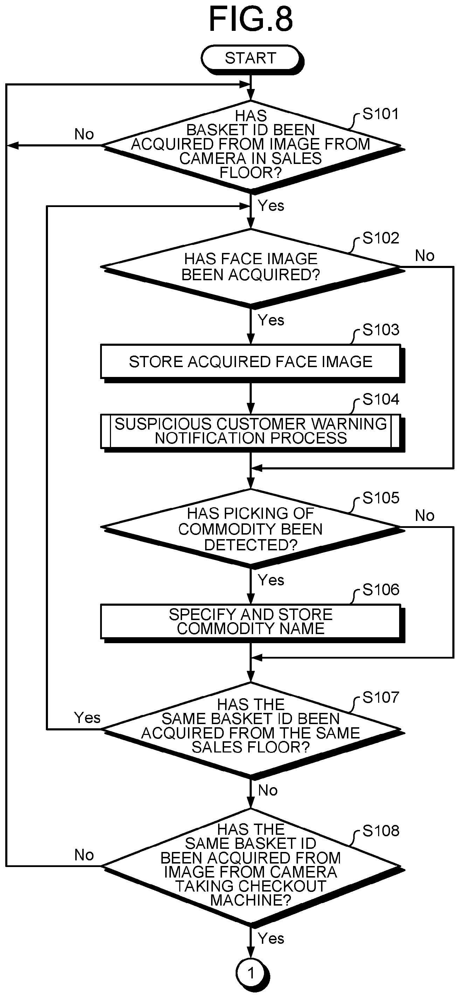

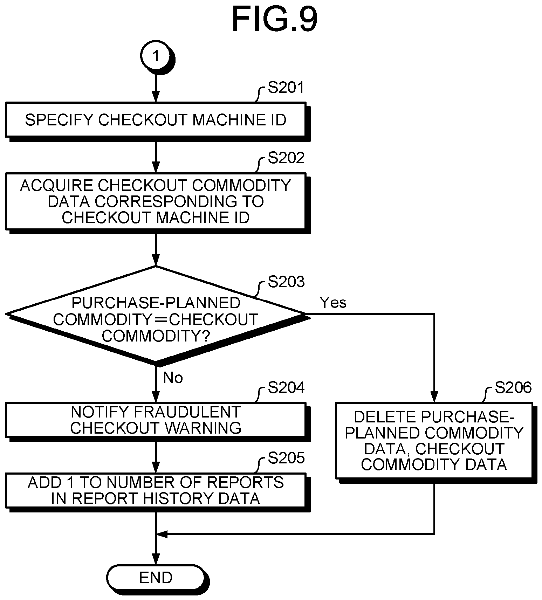

The procedure regarding a fraud detection process according to Embodiment 1 will be described with reference to flowcharts shown in FIG. 8 to FIG. 10.

As shown in FIG. 8, upon acquiring a basket ID from an image received from the camera 10 installed to capture the sales floor (step S101: Yes), the management device 40 acquires a face image of a customer from the received image (step S102). If a face image cannot be acquired (step S102: No), the process proceeds to step S105.

Upon acquiring the face image (step S102: Yes), the management device 40 stores the acquired face image into the face image data 45c (step S103), and performs a suspicious customer warning notification process (step S104).

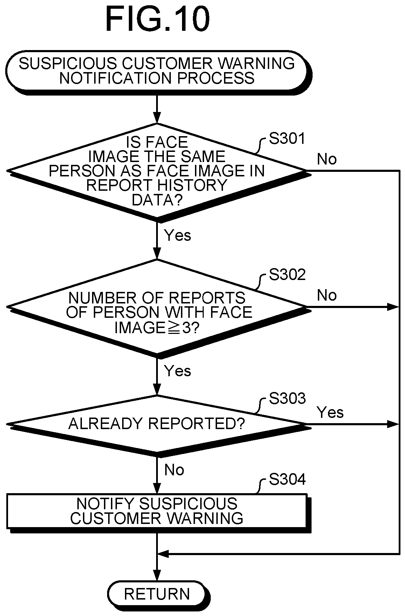

In the suspicious customer warning notification process, as shown in FIG. 10, if the acquired face image is not of the same person as the face image in the report history data 45f (step S301: No), the process proceeds to step S105.

If the acquired face image is of the same person as the face image in the report history data 45f (step S301: Yes), the report history data 45f is checked regarding the number of reports performed for the person of this face image (step S302). If the number of reports is less than three (step S302: No), the process proceeds to step S105. The number "three" is an example of the threshold value set for the determination.

If the number of reports is three or more (step S302: Yes), the report history data 45f is checked as to whether or not the person of this face image has already been reported to the clerk terminal 30 (step S303). If the report state in the report history data 45f is "reported" (step S303: Yes), the process proceeds to step S105.

If the report state in the report history data 45f is "unreported" (step S303: No), the clerk terminal 30 is notified of a suspicious customer warning (step S304), and the process proceeds to step S105. At this time, the report state in the report history data 45f is updated to "reported".

In step S105 shown in FIG. 8, if picking of a commodity from a commodity shelf to a shopping basket or a shopping cart is not detected (step S105: No), the process proceeds to step S107.

If picking of a commodity from a commodity shelf to a shopping basket or a shopping cart is detected (step S105: Yes), the corresponding commodity is specified based on the position on the commodity shelf from which the commodity is taken out, the commodity management data 45a, and the commodity shelf data 45b, and the name of the specified commodity is stored in the purchase-planned commodity data 45d (step S106).

If acquisition of the same basket ID as that acquired in step S101, from the image received from the camera 10 in the same sales floor as when the basket ID is acquired in step S101 continues (step S107: Yes), the process proceeds to step S102. If the same basket ID is not acquired (step S107: No), the process proceeds to step S108.

If the same basket ID as that acquired in step S101 is not acquired from the image received from the camera 10 installed to capture the self-checkout machine 50 (step S108: No), the process proceeds to step S101. If the same basket ID is acquired (step S108: Yes), the process proceeds to step S201.

From the same image as that used in step S108, the checkout machine ID of the self-checkout machine 50 with which the customer has performed checkout is specified (step S201). Then, checkout commodity data is acquired from the self-checkout machine 50 corresponding to the checkout machine ID (step S202), and is stored in the checkout commodity data 45e.

Information on the purchase-planned commodities in the purchase-planned commodity data 45d and information on the checkout commodities in the checkout commodity data 45e, related to the basket ID acquired in step S108, are extracted from data 45d and 45e and compared (step S203).

If there is a match between the purchase-planned commodities and the checkout commodities (step S203: Yes), the corresponding data in the purchase-planned commodity data 45d and the checkout commodity data 45e are deleted (step S206), and the process is ended.

If there is a mismatch between the purchase-planned commodities and the checkout commodities (step S203: No), the clerk terminal 30 is notified of a fraudulent checkout warning (step S204). Then, the report history data 45f is updated by adding 1 to the number of reports (step S205), and the process is ended.

### <Example of hardware configuration according to

### Embodiment 1>

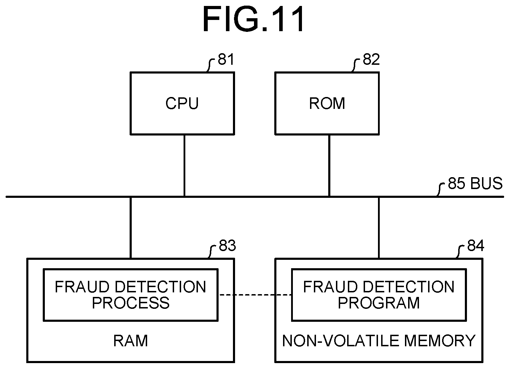

Correspondence between the management device 40 of the fraud detection system according to Embodiment 1 and a major hardware configuration of a computer will be described with reference to FIG. 11.

Generally, a computer has a configuration in which a CPU 81, a ROM 82, a RAM 83, a non-volatile memory 84, etc., are connected by a bus 85. A hard disk drive may be adopted instead of the non-volatile memory 84. For convenience of description, only the basic hardware configuration is shown.

Here, the ROM 82 or the non-volatile memory 84 stores therein a program necessary for activating an operating system (hereinafter, simply referred to as "OS"), and the CPU 81 reads and executes the program for the OS from the ROM 82 or the non-volatile memory 84 when it is powered on.

Meanwhile, various kinds of application programs to be executed on the OS are stored in the non-volatile memory 84, and the CPU 81 executes an application program while using the RAM 83 as a main memory, thereby executing a process corresponding to the application.

Also, the fraud detection program of the management device 40 in the fraud detection system according to Embodiment 1 is stored in the non-volatile memory 84 or the like similarly to the other application programs, and the CPU 81 loads and executes the program. In the case of the management device 40 in the fraud detection system according to Embodiment **1,** a fraud detection program including routines corresponding to the commodity management unit 46a, the commodity-shelf management unit 46b, the image acquisition unit 46c, the face image acquisition unit 46d, the face image judgement unit 46e, the basket ID acquisition unit 46f, the motion detection unit 46g, the purchase-planned commodity specification unit 46h, the checkout-machine ID specification unit 46i, the registered commodity specification unit 46j, the commodity judgement unit 46k, the notification unit 46l, and the data deletion unit 46m shown in FIG. 3 is stored in the non-volatile memory 84 or the like. The CPU 81 loads and executes the fraud detection program, whereby a fraud detection process corresponding to the commodity management unit 46a, the commodity-shelf management unit 46b, the image acquisition unit 46c, the face image acquisition unit 46d, the face image judgement unit 46e, the basket ID acquisition unit 46f, the motion detection unit 46g, the purchase-planned commodity specification unit 46h, the checkout-machine ID specification unit 46i, the registered commodity specification unit 46j, the commodity judgement unit 46k, the notification unit 46l, and the data deletion unit 46m is generated.

As described above, in the fraud detection system according to Embodiment 1, the purchase-planned commodities are specified from the image showing the customer picking the commodities, and matching between the purchase-planned commodities and the checkout commodities settled with the self-checkout machine is judged. If there is a mismatch, the clerk is notified of this mismatch. Therefore, a fraudulent act during checkout for commodities with the self-checkout machine can be efficiently detected.

In the above Embodiment 1, number information is used as the basket ID. However, the present disclosure is not limited thereto. Pattern information such as a logo, a design, or a pattern, or code information such as a QR code (registered trademark) may be used as the basket ID.

In the above Embodiment 1, the checkout commodity data is acquired from the self-checkout machine via the communication circuitry. However, the present disclosure is not limited thereto. An image of checkout commodity information displayed on the display of the self-checkout machine may be captured with a camera, and text information regarding checkout commodities may be detected from this image to acquire the checkout commodity data.

### [Modifications]

In the above Embodiment 1, matching between the purchase-planned commodities put in the shopping basket and the checkout commodities settled with the self-checkout machine is judged, and if there is a mismatch, the clerk is notified of the total monetary amount of the purchase-planned commodities and the total monetary amount of the checkout commodities. However, the present disclosure is not limited thereto.

The conceivable reasons of such a mismatch between the purchase-planned commodities and the checkout commodities may include: skipped scanning of a commodity barcode at the self-checkout machine; taking out a commodity from its package; and applying a barcode label of a different commodity. If there is a mismatch between the purchase-planned commodities and the checkout commodities, the clerk may be notified of details corresponding to these reasons. Specifically, the clerk may be notified of the content of mismatch, the content of what has not been settled, or the registered content of a different commodity.

In this modification, a description will be given of a fraud detection system that judges matching between purchase-planned commodities put in a shopping basket and checkout commodities settled with the self-checkout machine, and if there is a mismatch, notifies the clerk of the content of mismatch, the content of what has not been settled, or the registered content of a different commodity.

### <Example of display on clerk terminal 30 according to modification>

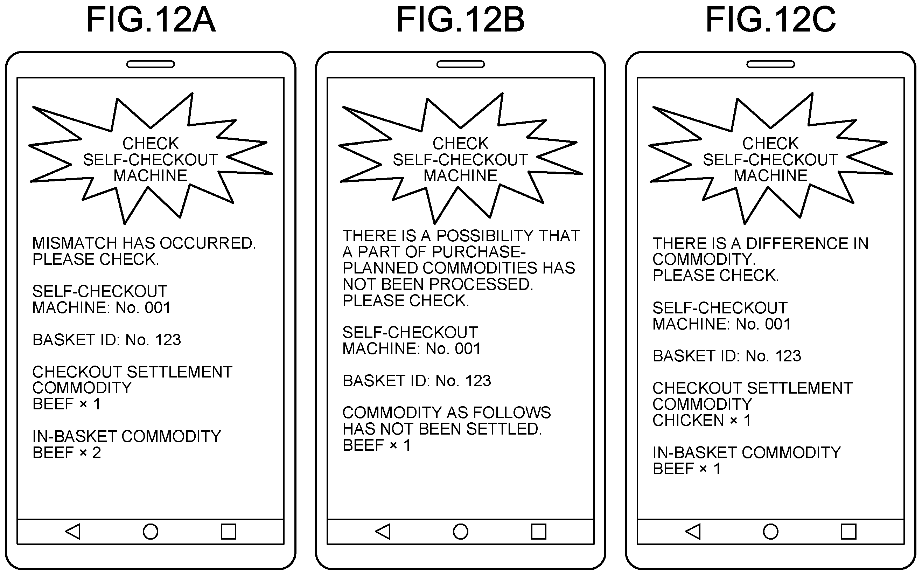

An example of display on the clerk terminal 30 according to the modification will be described with reference to FIGS. 12A to 12C.

As shown in FIG. 12A, when notifying the content of mismatch, "Mismatch has occurred. Please check.", "self-checkout machine: No. 001, basket ID: No. 123", and "checkout commodity: beef × 1, in-basket commodity: beef × 2" are displayed. This display allows notification of the name of the mismatched commodity, and the number thereof.

As shown in FIG. 12B, when notifying the content of what has not been settled, "There is a possibility that a part of purchase-planned commodities has not been processed. Please check.", "self-checkout machine: No. 001, basket ID: No. 123", "Commodity as follows has not been settled. beef × 1" are displayed. This display allows notification of the possibility that one or more commodities have been removed, without settlement, from the commodities having been in the shopping basket.

As shown in FIG. 12C, when notifying the registered content of a commodity that is different between the purchase-planned commodities and the checkout commodities, "There is a difference on commodity. Please check.", "self-checkout machine: No. 001, basket ID: No. 123", and "checkout commodity: chicken × 1, in-basket commodity: beef × 1" are displayed. This display allows notification that a different commodity is registered, between the purchase-planned commodity data 45d and the checkout commodity data 45e, which may be caused by attaching a barcode label of a commodity different from the purchase-planned commodity to the checkout commodity.

As described above, in the fraud detection system according to the modification, matching between the purchase-planned commodities put in the shopping basket and the checkout commodities settled with the self-checkout machine is judged, and if there is a mismatch, the clerk is notified of the content of mismatch, the content of what has not been settled, or the registered content of a different commodity. Therefore, a fraudulent act during checkout for commodities with the self-checkout machine can be efficiently detected.

### [Embodiment 2]

In the above Embodiment 1, purchase-planned commodities are specified from an image showing one customer picking the commodities, and matching between the purchase-planned commodities and checkout commodities settled with the self-checkout machine is judged. If there is a mismatch, the clerk is notified of this mismatch. However, the present disclosure is not limited thereto.

It is conceivable that a plurality of customers may visit the store together, and the respective customers may individually pick commodities. In this case, it needs to integrate the commodities picked by the respective customers visiting the store together, and specify these commodities as a group of purchase-planned commodities.

In order to address this issue, the customers visiting the store together may be associated with one basket ID. Thus, the commodities picked by the respective customers is specified as a group of purchase-planned commodities, and matching with checkout commodities settled with the self-checkout machine is judged, and if there is a mismatch, the clerk is notified of this mismatch.

In Embodiment 2, a description will be given of a fraud detection system that associates a plurality of customers visiting the store together with one basket ID to specify commodities picked by the respective customers as a group of purchase-planned commodities, judges matching with checkout commodities settled with the self-checkout machine, and if there is a mismatch, notifies the clerk of this mismatch.

### <Outline of fraud detection system according to

### Embodiment 2>

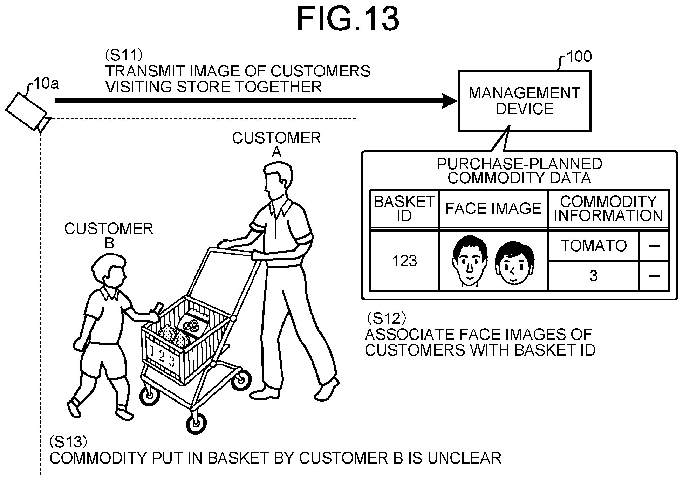

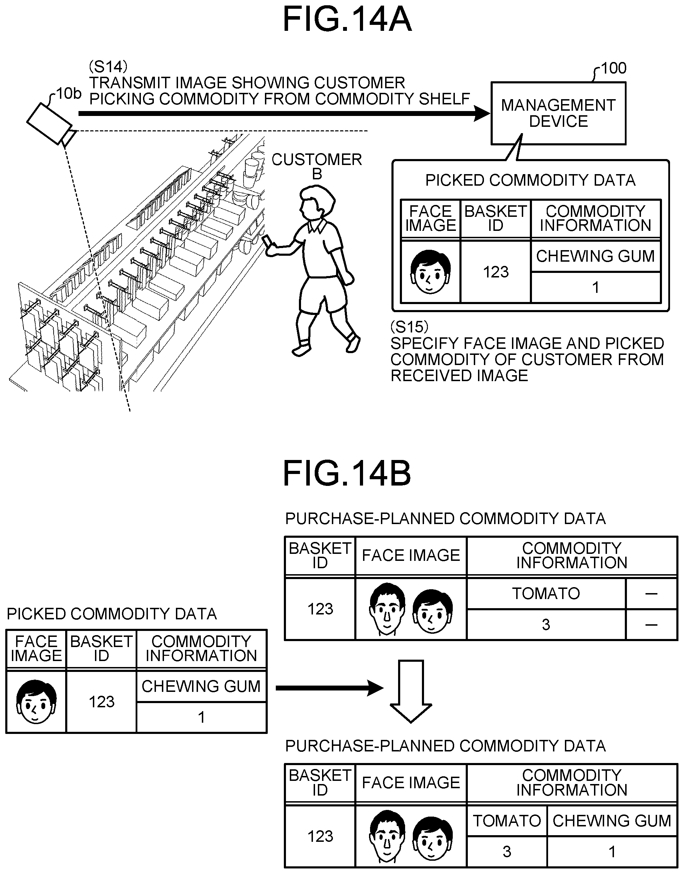

An outline of a fraud detection system according to Embodiment 2 will be described with reference to FIG. 13 and FIGS. 14A and 14B.

As shown in FIG. 13, in the fraud detection system according to Embodiment 2, a camera 10a transmits an image of a plurality of customers visiting the store together, to a management device 100 (S11). The management device 100 associates face images of the customers shown in the received image, with one basket ID (S12).

When detecting commodities put into the shopping basket, there may be a case where a commodity put by one (e.g., customer B) of the plurality of customers (e.g., customers A and B) into a shopping basket is unclear (S13). For example, when the commodity put by the customer B into the shopping basket cannot be specified while it is specified that the customer A puts three tomatoes into the shopping basket, commodity information in the purchase-planned commodity data remains to be "three tomatoes".

In the fraud detection system according to Embodiment 2, a commodity picked by each customer from a commodity shelf can be specified. Specifically, as shown in FIG. 14A, a camera 10b transmits an image of the customer picking a commodity from a commodity shelf, to the management device 100 (S14). That is, the commodity can be detected when it is picked from the commodity shelf, before it is put into the shopping basket.

The management device 100 specifies the face image of the customer and the picked commodity from the received image (S15), and stores them into the picked commodity data. For example, "one chewing gum" is stored as commodity information in the picked commodity data.

As shown in FIG. 14B, when the commodity put in the shopping basket is unclear, the fraud detection system according to Embodiment 2 searches the purchase-planned commodity data and the picked commodity data for the same basket ID and the same face image to specify the commodity put in the shopping basket. For example, the fraud detection system specifies that the unclear commodity put in the basket ID "123" is "one chewing gum" based on the picked commodity data.

As described above, in the fraud detection system according to Embodiment 2, a plurality of customers visiting the store together are associated with one basket ID, and the commodities picked by the respective customers are specified as a group of purchase-planned commodities. Then, matching with checkout commodities settled with the self-checkout machine is judged, and if there is a mismatch, the clerk is notified of this mismatch.

### <Configuration of management device 100 according to

### Embodiment 2>

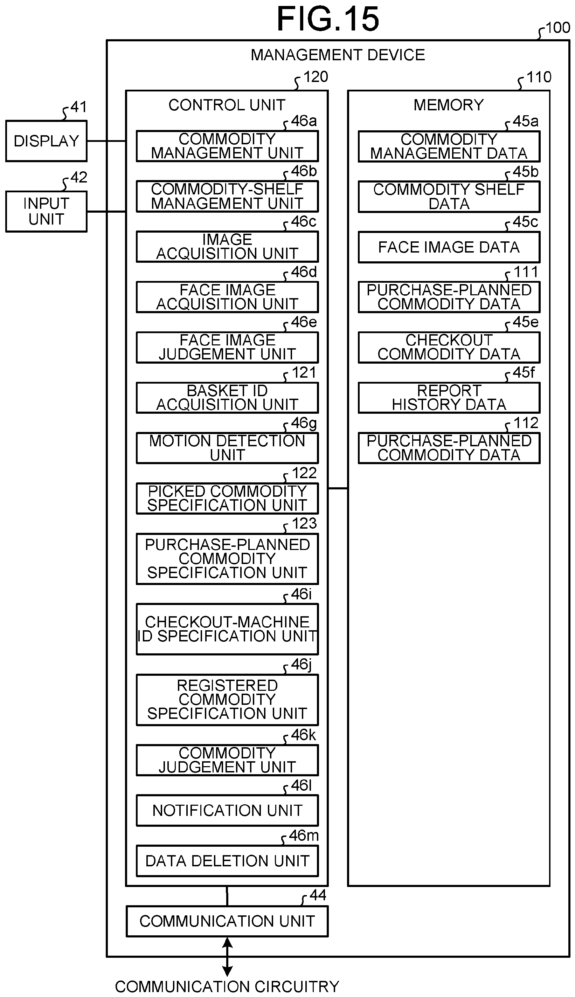

The configuration of the management device 100 according to Embodiment 2 will be described with reference to a functional block diagram shown in FIG. 15. As shown in FIG. 15, the management device 100 is connected to a display 41 and an input unit 42. The management device 100 includes a communication unit 44, a memory 110, and a control unit 120. The same functional units as those of the management device 40 shown in FIG. 3 are not repeatedly described.

The memory 110 is a storage device such as a hard disk drive or a non-volatile memory, and stores therein commodity management data 45a, commodity shelf data 45b, face image data 45c, purchase-planned commodity data 111, checkout commodity data 45e, report history data 45f, and picked commodity data 112.

The purchase-planned commodity data 111 includes commodity information of commodities that are picked and put in baskets by customers. The picked commodity data 112 includes commodity information of commodities picked from commodity shelves by customers.

The control unit 120 is a controller for controlling the entirety of the management device 100. The control unit 120 includes a commodity management unit 46a, a commodity-shelf management unit 46b, an image acquisition unit 46c, a face image acquisition unit 46d, a face image judgement unit 46e, a basket ID acquisition unit 121, a motion detection unit 46g, a picked commodity specification unit 122, a purchase-planned commodity specification unit 123, a checkout-machine ID specification unit 46i, a registered commodity specification unit 46j, a commodity judgement unit 46k, a notification unit 46l, and a data deletion unit 46m. In actuality, processes corresponding to the commodity management unit 46a, the commodity-shelf management unit 46b, the image acquisition unit 46c, the face image acquisition unit 46d, the face image judgement unit 46e, the basket ID acquisition unit 121, the motion detection unit 46g, the picked commodity specification unit 122, the purchase-planned commodity specification unit 123, the checkout-machine ID specification unit 46i, the registered commodity specification unit 46j, the commodity judgement unit 46k, the notification unit 46l, and the data deletion unit 46m are performed by loading programs for these units into a CPU and causing the CPU to execute the programs.

The basket ID acquisition unit 121 is a processing unit for acquiring basket IDs assigned to shopping baskets and shopping carts. The basket ID acquisition unit 121 reads out a number from a number tag attached to a shopping basket or a shopping cart shown in image data acquired by the image acquisition unit 46c to acquire this number as a basket ID.

Upon acquiring the basket ID, the basket ID acquisition unit 121 acquires, from the face image acquisition unit 46d, the face image of the customer (hereinafter referred to as "shopping customer") who carries the shopping basket or pushes the shopping cart, corresponding to the basket ID, and stores the basket ID and the face image in association with each other into the purchase-planned commodity data 111.

If it is detected that a customer other than the shopping customer is accompanying the shopping customer for a predetermined time period or more, the basket ID acquisition unit 121 acquires the face image of the other customer from the face image acquisition unit 46d, and stores the acquired face image, as a related face image, into the purchase-planned commodity data 111 in association with the basket ID corresponding to the shopping customer.

The picked commodity specification unit 122 is a processing unit for specifying commodities picked from commodity shelves by customers. If the picked commodity specification unit 122 detects a motion of taking out a commodity from a commodity shelf, from picking motions detected by the motion detection unit 46g, the picked commodity specification unit 122 specifies the corresponding commodity based on the position on the commodity shelf from which the commodity is picked, the commodity management data 45a, and the commodity shelf data 45b. Furthermore, the picked commodity specification unit 122 acquires the face image of this customer from the face image acquisition unit 46d, and specifies a basket ID corresponding to this face image from the purchase-planned commodity data 111. The acquired face image is stored in the picked commodity data 112 in association with the specified basket ID, the commodity, the picking motion (taking-out), and the time of the picking motion (taking-out). At this time, the basket management state in the picked commodity data 112 is "not yet done".

If the picked commodity specification unit 122 detects a motion of returning a commodity to the commodity shelf, from the picking motions detected by the motion detection unit 46g, the picked commodity specification unit 122 specifies the corresponding commodity based on the position on the commodity shelf from which the commodity is picked, the commodity management data 45a, and the commodity shelf data 45b. Furthermore, the face image of this customer is acquired by the face image acquisition unit 46d, and the face image, the picking motion (return) corresponding to the specified commodity, and the time of the picking motion (return) are stored in the picked commodity data 112 to update the data 112. At this time, the basket management state in the picked commodity data 112 is updated to "already returned". If there is an abnormality such as dropping of the specified commodity, this abnormality is stored under the item "abnormality" in the picked commodity data 112.

The purchase-planned commodity specification unit 123 is a processing unit for specifying commodities put in shopping baskets and shopping carts. If the purchase-planned commodity specification unit 123 detects a motion of taking out a commodity from a commodity shelf and putting the commodity in a shopping basket or a shopping cart, from the picking motions detected by the motion detection unit 46g, the purchase-planned commodity specification unit 123 specifies the corresponding commodity based on the position on the commodity shelf from which the commodity is taken out, the commodity management data 45a, and the commodity shelf data 45b. The basket ID of the shopping basket or the shopping cart in which the commodity is put is acquired by the basket ID acquisition unit 121, the specified commodity name is stored in the purchase-planned commodity data 111 in association with the basket ID, and the basket management state in the picked commodity data 112 corresponding to the basket ID and the commodity name is updated to "done".

If the purchase-planned commodity specification unit 123 detects a motion of putting a commodity in a shopping basket or a shopping cart without taking out the commodity from a commodity shelf, from the picking motions detected by the motion detection unit 46g, the face image of the customer having performed this picking motion is acquired by the face image acquisition unit 46d, and a commodity whose basket management state is "not yet done" in the commodity information corresponding to this face image is specified from the picked commodity data 112. The specified commodity is stored in the purchase-planned commodity data 111 related to the basket ID corresponding to the shopping basket or the shopping cart in which the commodity is put, to update the data 111. At this time, the basket management state of the commodity specified in the picked commodity data 112 is updated to "done".

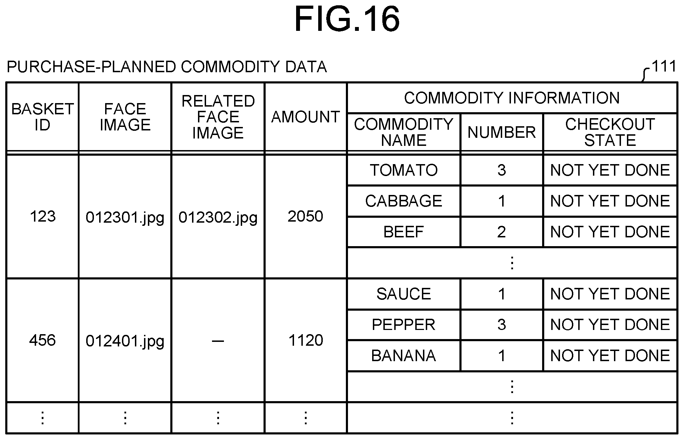

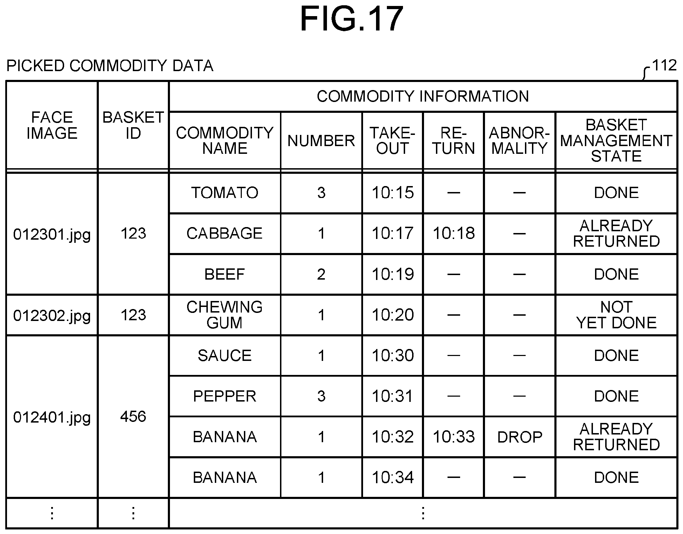

Next, an example of data stored in the memory 110 in the management device 100 shown in FIG. 15 will be described. FIG. 16 and FIG. 17 respectively show examples of the purchase-planned commodity data 111 and the picked commodity data 112 shown in FIG. 15.

In the purchase-planned commodity data 111 shown in FIG. 16, the basket ID "123" is associated with face image "012301.jpg", related face image "012302.jpg", and monetary amount "2,050" JPY. Furthermore, the basket ID "123" is associated with, as commodity information, a state where the commodity name is "tomato", the number is "3", and the checkout state is "not yet done", a state where the commodity name is "cabbage", the number is "1", and the checkout state is "not yet done", and a state where the commodity name is "beef", the number is "2", and the checkout state is "not yet done".

Furthermore, in the purchase-planned commodity data 111, the basket ID "456" is associated with face image "012401.jpg" and monetary amount "1,120" JPY. Moreover, the basket ID "456" is associated with, as commodity information, a state where the commodity name is "sauce", the number is "1", and the checkout state is "not yet done", a state where the commodity name is "pepper", the number is "3", and the checkout state is "not yet done", and a state where the commodity name is "banana", the number is "1", and the checkout state is "not yet done".

In the picked commodity data 112 shown in FIG. 17, the face image "012301.jpg" is associated with the basket ID "123". Furthermore, the face image "012301.jpg" is associated with, as commodity information, a state where the commodity name is "tomato", the number is "3", the takeout time is "10:15", and the basket management state is "done", a state where the commodity name is "cabbage", the number is "1", the takeout time is "10:17", the return time is "10:18", and the basket management state is "already returned", and a state where the commodity name is "beef", the number is "2", the takeout time is "10:19", and the basket management state is "done".

Furthermore, in the picked commodity data 112, the face image "012302.jpg" is associated with the basket ID "123". Furthermore, the face image "012302.jpg" is associated with, as commodity information, a state where the commodity name is "chewing gum", the number is "1", the takeout time is "10:20", and the basket management state is "not yet done".

Furthermore, in the picked commodity data 112, the face image "012401.jpg" is associated with the basket ID "456". Moreover, the face image "012401.jpg" is associated with, as commodity information, a state where the commodity name is "sauce", the number is "1", the takeout time is "10:30", and the basket management state is "not yet done", a state where the commodity name is "pepper", the number is "3", the takeout time is "10:31", and the basket management state is "done", a state where the commodity name is "banana", the number is "1", the takeout time is "10:32", the return time is "10:33", the abnormality is "drop", and the basket management state is "already returned", and a state where the commodity name is "banana", the number is "1", the takeout time is "10:34", and the basket management state is "done".

### <Example of correction of purchase-planned commodity data 111 according to Embodiment 2>

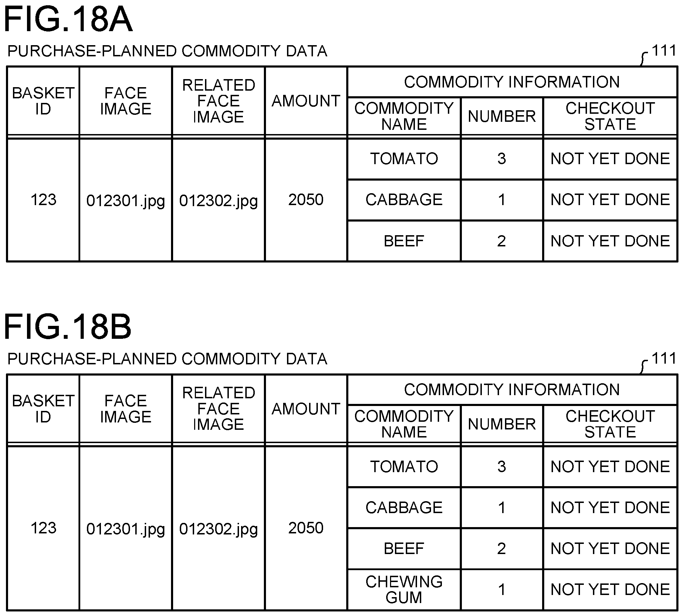

An example of correction of the purchase-planned commodity data 111 according to Embodiment 2 will be described with reference to FIGS. 18A and 18B.

The purchase-planned commodity data 111 shown in FIG. 18A indicates a state where the commodity names in the commodity information are "tomato", "cabbage", and "beef". If the commodity that the customer has put (add) in the shopping basket is unclear in this state, a commodity whose basket management state is "not yet done" is specified from the picked commodity data 112.

For example, if the picked commodity data 112 is in the state shown in FIG. 17, as for the commodity whose basket management state is "not yet done", it is specified that the commodity name is "chewing gum" and the number is "1".

As shown in FIG. 18B, the specified commodity is stored in the purchase-planned commodity data 111 to update the data 111. Specifically, the commodity names "tomato", "cabbage", "beef", and "chewing gum" are stored to update the data 111. The number of the added commodity, "chewing gum" is also registered as "1" based on the picked commodity data 112.

### <Procedure regarding correction process for purchase-planned commodity data 111 according to Embodiment 2>

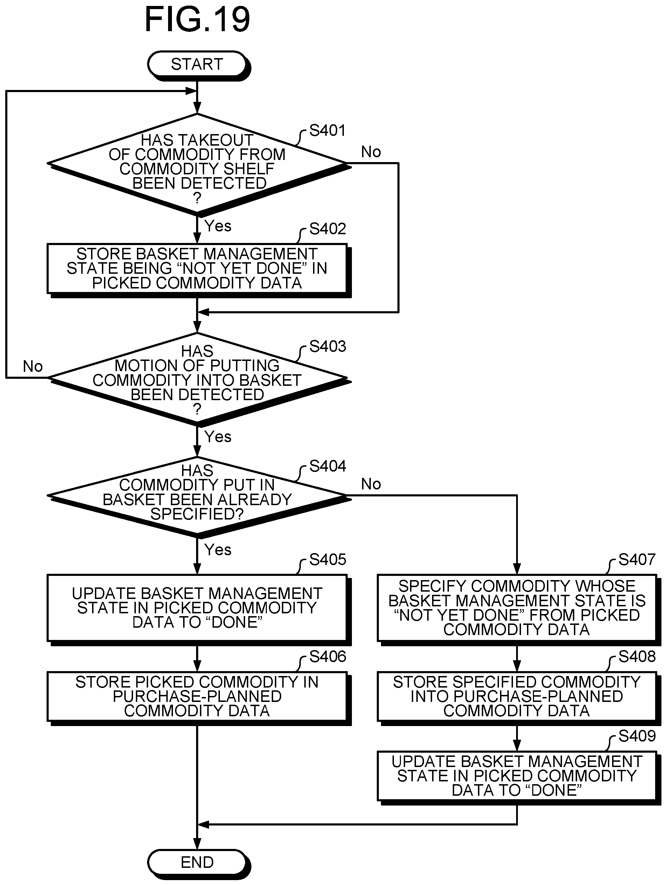

The procedure regarding a correction process for the purchase-planned commodity data 111 according to Embodiment 2 will be described with reference to a flowchart shown in FIG. 19.

As shown in FIG. 19, upon detecting that a commodity is taken out from a commodity shelf (step S401: Yes), the management device 100 specifies the taken-out commodity, and stores, in the picked commodity data 112, the taken-out commodity and the corresponding basket management state being "not yet done" (step S402).

If a motion of putting the commodity in the shopping basket or the shopping cart is not detected (step S403: No), the process proceeds to step S401.

If a motion of putting the commodity in the shopping basket or the shopping cart is detected (step S403: Yes), it is judged whether or not the commodity put in the basket has already been specified (step S404).

When the commodity put in the basket is the commodity taken out in step S401 and has already been specified (step S404: Yes), the basket management state in the picked commodity data 112 regarding this commodity is updated to "done" (step S405). Then, this commodity is stored in the purchase-planned commodity data 111 (step S406) to end the process.

When the commodity put in the basket is not the commodity taken out in step S401 and cannot be specified (step S404: No), a commodity whose basket management state is "not yet done" is specified from the picked commodity data 112 (step S407), and the specified commodity is stored in the purchase-planned commodity data 111 (step S408). The basket management state in the picked commodity data 112 regarding the specified commodity is updated to "done" (step S409) to end the process.

As described above, in the fraud detection system according to Embodiment 2, a plurality of customers visiting the store together are associated with one basket ID, whereby commodities picked by the respective customers are specified as a group of purchase-planned commodities, and matching with checkout commodities settled with the self-checkout machine is judged. If there is a mismatch, the clerk is notified of this mismatch. Therefore, a fraudulent act during checkout for commodities with the self-checkout machine can be efficiently detected.

A fraud detection device according to one aspect of the present disclosure is used in a self-checkout system in which a customer registers a commodity by performing a scanning operation by himself/herself. The fraud detection device includes: an image acquisition unit configured to acquire a commodity-picking image that is captured such that identification information, which is recognizable from an image and is assigned to a container prepared in a store and used to contain a commodity, and the commodity picked and contained in the container are recognizable; a memory configured to store therein commodity information of the identification information of the container, which have been specified from the commodity-picking image, in association with each other; a registered commodity specification unit configured to specify commodity information of a commodity registered in the self-checkout system; a commodity confirmation unit configured to confirm whether or not the commodity information of the commodity specified by the registered commodity specification unit matches the commodity information of the commodity stored in the memory in association with the identification information of the container in which the commodity specified by the registered commodity specification unit has been contained; and a notification unit configured to issue an alert when it is confirmed by the commodity confirmation unit that there is a mismatch.

In the above configuration, the container is a shopping basket or a shopping cart.

In the above configuration, the identification information of the container is any one of number information, pattern information, and code information that uniquely identify the container.

In the above configuration, the registered commodity specification unit acquires the commodity information of the registered commodity from the self-checkout system via an interface.

In the above configuration, the image acquisition unit further acquires a screen image when the commodity is registered in the self-checkout system, and the registered commodity specification unit specifies the commodity information by recognizing the screen image as characters.

In the above configuration, if there is a mismatch between commodity information of the commodity specified by the registered commodity specification unit and the commodity information of the commodity stored in the memory, the commodity confirmation unit extracts a part corresponding to the mismatch, and the notification unit makes a notification including a result extracted by the commodity confirmation unit.

In the above configuration, the commodity confirmation unit confirms that there is an omission of commodity registration if any of commodities stored in association with the identification information of the container is not included in commodities specified by the registered commodity specification unit, and the notification unit notifies that the omission of commodity registration occurs.

In the above configuration, when the commodity confirmation unit has confirmed that the commodity specified from the commodity-picking image does not match the commodity specified by the registered commodity specification unit, the notification unit notifies that a commodity different from an actual commodity has been registered in the self-checkout system.

In the above configuration, the memory deletes accumulated information when the commodity confirmation unit has confirmed that there is a match.

In the above configuration, the image acquisition unit also acquires a face image of a customer in addition to the commodity-picking image, the memory stores therein a face image of a customer, which has been notified by the notification unit, in association with the number of times of notification, and the notification unit performs a process of displaying the face image of the customer whose number of times of notification exceeds a predetermined threshold value.

A fraud detection system according to one aspect of the present disclosure is used for a self-checkout system in which a customer registers a commodity by performing a scanning operation by himself/herself. The fraud detection system includes: an image acquisition unit configured to acquire a commodity-picking image that is captured such that dentification information, which is recognizable from an image and is assigned to a container prepared in a store and used to contain a commodity, and the commodity picked and contained in the container are recognizable; a memory configured to store therein commodity information of the commodity and the identification information of the container, which have been specified from the commodity-picking image, in association with each other; a registered commodity specification unit configured to specify commodity information of a commodity registered in the self-checkout system; a commodity confirmation unit configured to confirm whether or not the commodity information of the commodity specified by the registered commodity specification unit matches the commodity information of the commodity stored in the memory in association with the identification information of the container in which the commodity specified by the registered commodity specification unit has been contained; and
a notification unit configured to issue an alert when it is confirmed by the commodity confirmation unit that there is a mismatch.

A fraud detection method according to one aspect of the present disclosure is used for a self-checkout system in which a customer registers a commodity by performing a scanning operation by himself/herself. The fraud detection method comprising: acquiring a commodity-picking image that is captured such that identification information, which is recognizable from an image and is assigned to a container prepared in a store and used to contain a commodity, and the commodity picked and contained in the container are recognizable; storing, in a memory, commodity information of the commodity and the identification information of the container, which have been specified from the commodity-picking image, in association with each other; specifying commodity information of a commodity registered in the self-checkout system; confirming whether or not the commodity information of the commodity specified in the specifying matches the commodity information of the commodity stored in the memory in association with the identification information of the container in which the commodity specified in the specifying has been contained; and issuing an alert when it is confirmed that there is a mismatch.

A computer program product for fraud detection according to one aspect of the present disclosure is executed in in a self-checkout system in which a customer registers a commodity by performing a scanning operation by himself/herself. The computer program product causing a computer to execute: acquiring a commodity-picking image that is captured such that identification information, which is recognizable from an image and is assigned to a container prepared in a store and used to contain a commodity, and the commodity picked and contained in the container are recognizable; storing, in a memory, commodity information of a commodity and the identification information of the container, which have been specified from the commodity-picking image, in association with each other; specifying commodity information of a commodity registered in the self-checkout system; confirming whether or not the commodity information of the commodity specified in the specifying matches the commodity information of the commodity stored in the memory in association with the identification information of the container in which the commodity has been contained; and issuing an alert when it is confirmed that there is a mismatch.

According to the present disclosure, a fraudulent act during checkout for commodities with a self-checkout machine can be efficiently detected and handled.

The components shown in the above embodiments are conceptually functional components, and thus may not necessarily be physically limited thereto. That is, distributed or integrated forms of each device are not limited to the forms illustrated in the drawings, and all or some of the forms may be distributed or integrated functionally or physically in any unit depending on various loads, use statuses, or the like.

The fraud detection device, the fraud detection system, the fraud detection method, and the computer program product for fraud detection according to the present disclosure are suitable for efficiently detecting a fraudulent act during checkout for commodities with a self-checkout machine.

## Claims

1. A fraud detection device (40, 100) in a self-checkout system in which a customer registers a commodity by performing a scanning operation by himself/herself, the device comprising:
an image acquisition unit (46c) configured to acquire a commodity-picking image that is captured such that identification information, which is recognizable from an image and is assigned to a container prepared in a store and used to contain a commodity, and the commodity picked and contained in the container are recognizable;
a memory (45, 110) configured to store therein commodity information of the commodity and the identification information of the container, which have been specified from the commodity-picking image, in association with each other;
a registered commodity specification unit (46j) configured to specify commodity information of a commodity registered in the self-checkout system;
a commodity confirmation unit (46k) configured to confirm whether or not the commodity information of the commodity specified by the registered commodity specification unit (46j) matches the commodity information of the commodity stored in the memory (45, 110) in association with the identification information of the container in which the commodity specified by the registered commodity specification unit (46j) has been contained; and
a notification unit (46i) configured to issue an alert when it is confirmed by the commodity confirmation unit (46k) that there is a mismatch.

2. The fraud detection device (40, 100) according to claim 1, wherein the container is a shopping basket or a shopping cart.

3. The fraud detection device (40, 100) according to claim 1, wherein the identification information of the container is any one of number information, pattern information, and code information that uniquely identify the container.

4. The fraud detection device (40, 100) according to claim 1 or 3, wherein the registered commodity specification unit (46j) acquires the commodity information of the registered commodity from the self-checkout system via an interface.

5. The fraud detection device (40, 100) according to claim 1 or 3, wherein
the image acquisition unit (46c) further acquires a screen image when the commodity is registered in the self-checkout system, and
the registered commodity specification unit (46j) specifies the commodity information of the commodity by recognizing the screen image as characters.

6. The fraud detection device (40, 100) according to claim 1, wherein
if there is a mismatch between commodity information of the commodity specified by the registered commodity specification unit (46j) and the commodity information of the commodity stored in the memory (45, 110), the commodity confirmation unit (46k) extracts a part corresponding to the mismatch, and
the notification unit (46i) makes a notification including a result extracted by the commodity confirmation unit (46k).

7. The fraud detection device (40, 100) according to claim 1, wherein
the commodity confirmation unit (46k) confirms that there is an omission of commodity registration if any of pieces of commodity information of commodities stored in association with the identification information of the container is not included in pieces of commodity information of commodities specified by the registered commodity specification unit (46j), and
the notification unit (46i) notifies that the omission of commodity registration occurs.

8. The fraud detection device (40, 100) according to claim 1, wherein
when the commodity confirmation unit (46k) has confirmed that the commodity information of the commodity specified from the commodity-picking image does not match the commodity information of the commodity specified by the registered commodity specification unit (46j),
the notification unit (46i) notifies that a commodity different from an actual commodity has been registered in the self-checkout system.

9. The fraud detection device (40, 100) according to claim 1, wherein
the memory (45, 110) deletes accumulated information when the commodity confirmation unit (46k) has confirmed that there is a match.

10. The fraud detection device (40, 100) according to claim 1, wherein
the image acquisition unit (46c) acquires a face image of a customer in addition to the commodity-picking image,
the memory (45, 110) stores therein a face image of a customer, which has been notified by the notification unit (46i), in association with the number of times of notification, and
the notification unit (46i) performs a process of displaying the face image of the customer whose number of times of notification exceeds a predetermined threshold value.

11. A fraud detection system in a self-checkout system in which a customer registers a commodity by performing a scanning operation by himself/herself, the system comprising:
an image acquisition unit (46c) configured to acquire a commodity-picking image that is captured such that identification information, which is recognizable from an image and is assigned to a container prepared in a store and used to contain a commodity, and the commodity picked and contained in the container are recognizable;
a memory (45, 110) configured to store therein commodity information of the commodity and the identification information of the container, which have been specified from the commodity-picking image, in association with each other;
a registered commodity specification unit (46j) configured to specify commodity information of a commodity registered in the self-checkout system;
a commodity confirmation unit (46k) configured to confirm whether or not the commodity information of the commodity specified by the registered commodity specification unit (46j) matches the commodity information of the commodity stored in the memory (45, 110) in association with the identification information of the container in which the commodity specified by the registered commodity specification unit (46j) has been contained; and
a notification unit (46i) configured to issue an alert when it is confirmed by the commodity confirmation unit (46k) that there is a mismatch.

12. A fraud detection method in a self-checkout system in which a customer registers a commodity by performing a scanning operation by himself/herself, the method comprising:
acquiring a commodity-picking image that is captured such that identification information, which is recognizable from an image and is assigned to a container prepared in a store and used to contain a commodity, and the commodity picked and contained in the container are recognizable;
storing, in a memory (45, 110), commodity information of the commodity and the identification information of the container, which have been specified from the commodity-picking image, in association with each other;
specifying commodity information of a commodity registered in the self-checkout system;
confirming whether or not the commodity information of the commodity specified in the specifying matches the commodity information of the commodity stored in the memory (45, 110) in association with the identification information of the container in which the commodity specified in the specifying has been contained; and
issuing an alert when it is confirmed that there is a mismatch.

13. A computer program product for fraud detection executed in a self-checkout system in which a customer registers a commodity by performing a scanning operation by himself/herself, the computer program product causing a computer to execute:
acquiring a commodity-picking image that is captured such that identification information, which is recognizable from an image and is assigned to a container prepared in a store and used to contain a commodity, and the commodity picked and contained in the container are recognizable;
storing, in a memory (45, 110), commodity information of a commodity and the identification information of the container, which have been specified from the commodity-picking image, in association with each other;
specifying commodity information of a commodity registered in the self-checkout system;
confirming whether or not the commodity information of the commodity specified in the specifying matches the commodity information of the commodity stored in the memory (45, 110) in association with the identification information of the container in which the commodity has been contained; and
issuing an alert when it is confirmed that there is a mismatch.
